# EUROPEAN PATENT SPECIFICATION

(11) **EP 2 549 682 B1**
(45) Date of publication and mention of the grant of the patent: **19.06.2019**
(21) Application number: 10847744.9
(22) Date of filing: 15.10.2010
(51) Int. Cl.: H04J 3/06, H04J 3/16, H04L 12/24

(54) **METHOD AND APPARATUS FOR IMPLEMENTING FRAME HEADER ALIGNMENT AND MULTI-FRAME ZEROING**
VERFAHREN UND VORRICHTUNG ZUR IMPLEMENTIERUNG EINER FRAME-HEADER-AUSRICHTUNG UND EINER MULTIFRAME-NULLSTELLUNG
PROCÉDÉ ET APPAREIL POUR METTRE EN UVRE L'ALIGNEMENT DES EN-TÊTES DE TRAMES ET LA MISE À ZÉRO MULTI-TRAMES

(30) Priority: 16.03.2010 CN 201010132327
(43) Date of publication of application: 23.01.2013
(73) Proprietor: ZTE Corporation, Shenzhen, Guangdong 518057 (CN)
(72) Inventor: YU, Shide, Shenzhen Guangdong 518057 (CN); MA, Wenkai, Shenzhen Guangdong 518057 (CN)
(74) Representative: Studio Torta S.p.A.
(86) International application number: PCT/CN2010/077787
(87) International publication number: WO 2011/113275

(56) References cited:
- EP-A1- 2 139 160
- CN-A- 1 832 629
- CN-A- 101 389 146
- CN-A- 101 814 968
- US-A1- 2004 001 484
- US-B1- 7 106 862

## Description

### Field of the Invention

The present invention relates to the field of an Optical Transport Network (OTN), in particular to a method and an apparatus for implementing frame header alignment and multi-frame zeroing.

### Background of the Invention

As a core technology of a new generation bearer network, an OTN can realize transparent transmission and cross dispatching of large granularity service flows and has been widely applied. The cross dispatching of customer service flows is an important function of an OTN system. When an existing OTN cross dispatching system performs cross dispatching, frame header alignment and multi-frame zeroing for frame data are required.

In the prior art, during the cross dispatching or other frame data processing, one reference frame header indication signal is used to complete the frame header alignment for a plurality of paths of OTN frame data, and one multi-frame zeroing indication signal is then used to complete the multi-frame zeroing for a plurality of paths of OTN frame data. The reference frame header indication signal and the multi-frame zeroing indication signal have to be generated respectively due to different periods, as a result, the process is complex when the OTN cross dispatching system or other OTN frame processing system completes frame header alignment and multi-frame zeroing, the working efficiency of the system is influenced, and the logic resources of the system are wasted. Application EP 2139160 discloses a communication system such as optical transport networks, OTNs wherein a receiver establishes frame alignment by detecting a multi-frame alignment signal, MFAS which is repeated each 256 times.

### Summary of the Invention

In view of the above, the present invention provides a method and an apparatus for implementing frame header alignment and multi-frame zeroing, which solve the problems of low working efficiency of the OTN frame processing system and wasted system resources in the existing technology caused by the complex frame header alignment and multi-frame zeroing process.

The technical solution of the present invention is implemented as follows.

The present invention provides a method for implementing frame header alignment and multi-frame zeroing, according to appended claims 1 and 2.

The present invention also provides an apparatus for implementing frame header alignment and multi-frame according to appended claim 3.

### Brief Description of the Drawings

Fig. 1 is a flow diagram of a method for implementing frame header alignment and multi-frame zeroing in an embodiment of the present invention;
Fig. 2 is a composition and structure diagram of an apparatus for implementing frame header alignment and multi-frame zeroing in an embodiment of the present invention;
Fig. 3 is a pulse diagram of an indication signal in an embodiment of the present invention;
Fig. 4 is a composition and structure diagram of an OTN cross dispatching system;
Fig. 5 is a flow chart of implementing a cross dispatching process by using the method in the embodiment of the present invention.

### Detailed Description of the Embodiments

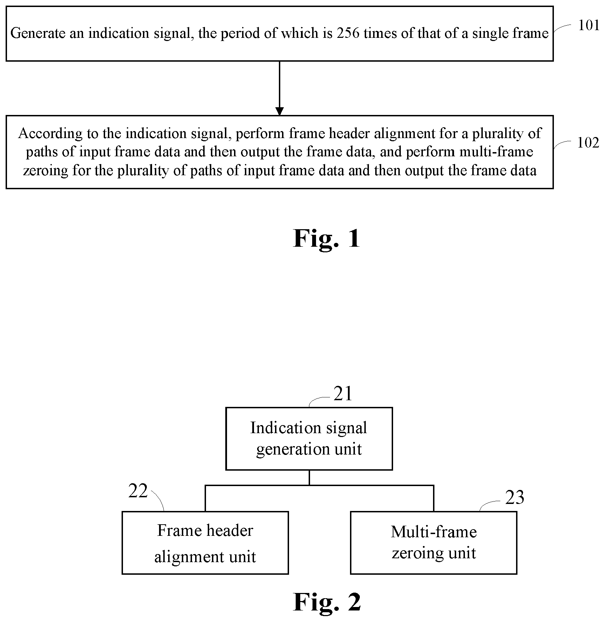

With reference to Fig. 1, the method for implementing frame header alignment and multi-frame zeroing in an embodiment of the present invention mainly comprises the following steps:
Step 101: an indication signal, the period of which is 256 times of that of a single frame, is generated;
Step 102: according to the indication signal, frame header alignment is performed for a plurality of paths of input frame data and then the frame data are output, and multi-frame zeroing is performed for the plurality of paths of input frame data and then the frame data are output.

To implement the method, an embodiment of the present invention also provides an apparatus for implementing frame header alignment and multi-frame zeroing. With reference to Fig. 2, the apparatus mainly comprises: an indication signal generation unit 21, a frame header alignment unit 22 and a multi-frame zeroing unit 23, wherein the indication signal generation unit 21 is configured to generate an indication signal, the period of which is 256 times of that of a single frame; the frame header alignment unit 22 is configured to, according to the indication signal generated by the indication signal generation unit 21, perform frame header alignment for a plurality of paths of input frame data and then output the frame data; the multi-frame zeroing unit 23 is configured to, according to the indication signal generated by the indication signal generation unit 21, perform multi-frame zeroing for the plurality of paths of input frame data and then output the frame data.

Herein, the period of the generated indication signal is 256 times of that of a single frame, so that the multi-frame overhead of the OTN frame data can be zeroed once every 256 frames. The single frame can be an Optical channel Date Unit K (ODU_K) (K=1, 2, 3) single frame.

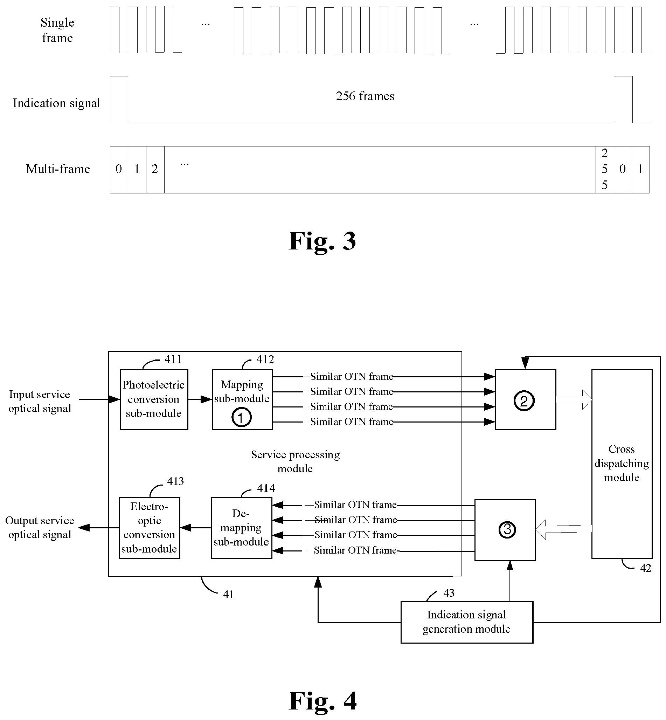

Specifically, as shown in Fig. 3, the indication signal generated by the indication signal generation unit 21 is specifically as follows: the indication signal, the period of which is 256 times of the ODUK frame period, wherein one high level is generated every 256 ODUk frame periods.

The indication signal generation unit 21 respectively outputs the indication signal to the frame header alignment unit 22 and the multi-frame zeroing unit 23, and the frame header alignment unit 22 and the multi-frame zeroing unit 23 respectively perform frame header alignment and multi-frame zeroing according to the indication signal.

The frame header alignment unit 22 first performs frame header positioning for a plurality of paths of frame data input to the frame header alignment unit 22, and then writes the frame data into a cache from the positioned frame header position of each path of frame data. After detecting an arrival of a high level of the indication signal generated by the indication signal generation unit 21, the frame header alignment unit 22 simultaneously reads each path of frame data from an initial position of the cache, to complete one frame header alignment for a plurality of paths of data. Herein, as the indication signal outputs one high level each time 256 frames of data are input, the frame header alignment unit 22 also will detect one high level of the indication signal each time 256 frames of data are input, so that it performs frame header alignment once each time 256 frames of data are input.

If the deviations between the indication signal and a plurality of paths of frame data input to the frame header alignment unit 22 in terms of frame header, it is required to delay the indication signal, and then the frame header alignment is performed for the plurality of paths of input frame data according to the delayed indication signal.

Herein, when the indication signal is delayed, a delay period of the indication signal is determined by a deviation value between a frame header of the indication signal and a frame header of the frame data to be performed with frame header alignment. Generally, one frame of data can be optionally selected from a plurality of paths of frame data to be performed with frame header alignment, the deviation value between the frame header of the frame data and the frame header of the indication signal is determined, and the deviation value is used as the delay period of the indication signal.

When detecting that the high level of the indication signal from the indication signal generation unit 21 arrives, the multi-frame zeroing unit 23 zeros the multi-frame of one or more paths of frame data input thereto at this moment and then outputs the frame data, obtains the multi-frame of frame data input in turn latter by accumulating 1 to the multi-frame of the immediately previous frame data and outputs the frame data, until the high level of the indication signal arrives again when there are 255 multi-frames of the input frame data, zeros the multi-frame of frame data input at this moment. In this way, the multi-frame zeroing unit 23 performs multi-frame zeroing once each time 256 frames of data are input. The above process is repeated again and again, to complete the multi-frame zeroing for a plurality of paths of frame data. Multi-frames are shown in Fig. 3.

The apparatus and the method provided in the embodiments of the present invention will be applied in an OTN cross dispatching system, with the following specific implementation.

As shown in Fig. 4, the OTN cross dispatching system mainly comprises: a service processing module 41, a cross dispatching module 42 and an indication signal generation module 43, wherein the service processing module 41 comprises a photoelectric conversion sub-module 411, a mapping sub-module 412, an electro-optic conversion sub-module 413 and a de-mapping sub-module 414.

The main processing process of the OTN cross dispatching system is described as follows. First, an input service optical signal is fed into the photoelectric conversion sub-module 411 and then photo-electrically converted into a service data electrical signal. The service data electrical signal is mapped and encapsulated to a similar OTN frame data by the mapping sub-module 412. Then, the similar OTN frame data obtained by mapping is fed into the cross dispatching module 42 to be crossly dispatched. Afterwards, the crossly dispatched similar OTN frame data is then transmitted to the de-mapping sub-module 414 to be de-mapped and converted into a service data electrical signal in a standard service frame format. Finally, the service data electrical signal is electro-optically converted by the electro-optic conversion sub-module 413 into a service optical signal to be output.

Herein, the similar OTN frame is a frame format with a fixed rate level. Similar to an OTN frame, the similar OTN frame is fixed in length and is used for encapsulating service data electrical signals with different rate levels.

During the processing of the OTN cross dispatching system, it is required to perform the frame header alignment twice and the multi-frame zeroing once according to the indication signal generated by the indication signal generation module 43. The two frame header alignments are respectively performed before and after the cross dispatching; while the multi-frame zeroing is required to be performed when the source-end processing sub-module 411 completes mapping of the service data electrical signal, to count the multi-frame overhead in the similar OTN frame data, and to complete the generation of multi-frame bytes in the OTN frame data.

For the OTN cross dispatching system, before applying the method in the embodiment of the present invention in the cross dispatching process thereof, as shown in Fig. 4, it is required to set the indication signal generation unit in the apparatus in the embodiment of the present invention into the indication signal generation module 43 in Fig. 4 or replace the indication signal generation module 43 in Fig. 4 with the indication signal generation unit, and set the multi-frame zeroing unit in the mapping sub-module 412, as shown by ① in Fig. 4, and set the frame header alignment unit both at the input end and the output end of the cross dispatching module 42, as shown by ② and ③ in Fig. 4.

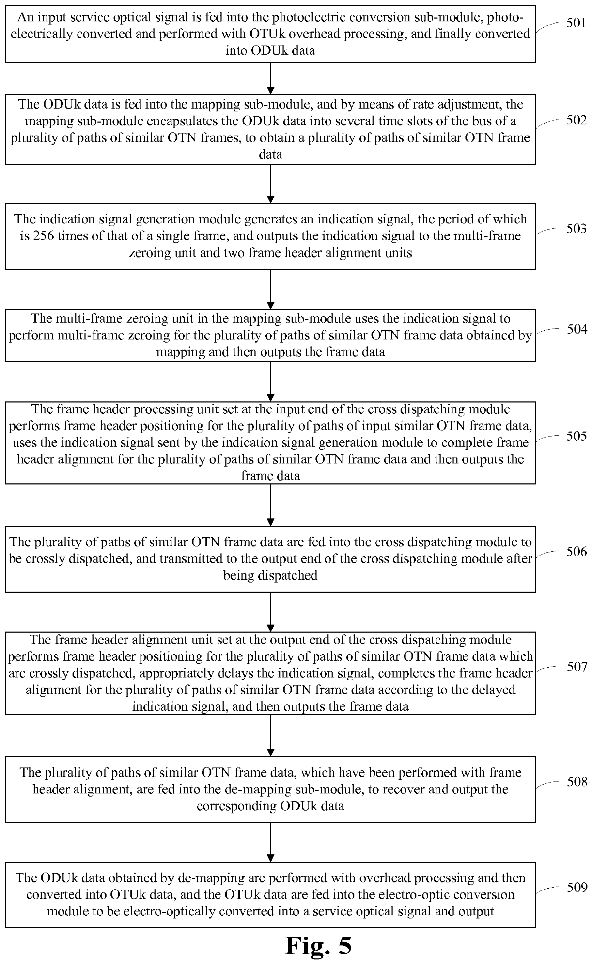

Latter, with reference to Fig. 5, the specific flow of completing cross dispatching via the system as shown in Fig. 4 is as follows.

Step 501: An input service optical signal is fed into the photoelectric conversion sub-module 411, photo-electrically converted and performed with OTUk (k=1, 2, 3) overhead processing, and finally converted into ODUk data.

Step 502: The ODUk data are fed into the mapping sub-module 412, and by means of rate adjustment, the mapping sub-module 412 encapsulates the ODUk data into several time slots of the bus of a plurality of paths of similar OTN frames, to obtain a plurality of paths of similar OTN frame data.

Step 503: The indication signal generation module 43 generates an indication signal, the period of which is 256 times of that of a single frame, and outputs the indication signal to the multi-frame zeroing unit at ① and two frame header alignment units at ② and ③ in Fig. 4.

Step 504: As shown by ① in Fig. 4, the multi-frame zeroing unit in the mapping sub-module 412 uses the indication signal to perform multi-frame zeroing for the plurality of paths of similar OTN frame data obtained by mapping and then outputs the frame data.

Herein, the specific process that the multi-frame zeroing unit completes multi-frame zeroing for various paths of similar OTN frame data has been described in details, which will not be described again.

Step 505: The output similar OTN frame data, which have been performed with multi-frame zeroing, are transmitted to the input end (as shown by ② in Fig. 4) of the cross dispatching module 42, the frame header processing unit set at the input end of the cross dispatching module 42 performs frame header positioning for the plurality of paths of input similar OTN frame data, uses the indication signal sent by the indication signal generation module 43 to complete frame header alignment for the plurality of paths of similar OTN frame data and then outputs the frame data.

Herein, the specific process of frame header alignment has been described in details, which will not be described again.

Step 506: The plurality of paths of similar OTN frame data, which have been performed with frame header alignment, are fed into the cross dispatching module 42 to be crossly dispatched, and transmitted to the output end of the cross dispatching module 42 after being dispatched.

Step 507: As shown by ③ in Fig. 4, the frame header alignment unit set at the output end of the cross dispatching module 42 performs frame header positioning for the plurality of paths of similar OTN frame data which have been crossly dispatched, appropriately delays the indication signal, completes the frame header alignment for the plurality of paths of input similar OTN frame data according to the delayed indication signal, and then outputs the frame data.

Herein, due to cross dispatching or other processing, the deviations between the plurality of paths of similar OTN frame data and the indication signal in terms of frame header are relatively large, during the frame header alignment after cross dispatching, it is usually required to delay the indication signal first and then perform the frame header alignment.

Step 508: The plurality of paths of similar OTN frame data, which have been performed with frame header alignment, are fed into the de-mapping sub-module 413, to recover and output the corresponding ODUk data.

Step 509: The ODUk data obtained by de-mapping are performed with overhead processing and then converted into OTUk data, and the OTUk data are fed into the electro-optic conversion module 414 to be electro-optically converted into a service optical signal and output, so far, the cross dispatching of the service optical signal in the OTN has been completed.

Above contents are only preferable embodiments of the present invention and are not used for limiting the present invention. Any modifications and improvements within the principle of the present invention should be contained within the protection scope of the present invention as defined in the appended claims.

## Claims

1. A method for implementing frame header alignment and multi-frame zeroing, comprising:
generating an indication signal period of which is 256 times of that of a single frame; and
according to the indication signal, performing frame header alignment for a plurality of paths of input frame data and then outputting the frame data, and performing multi-frame zeroing for the plurality of paths of input frame data and then outputting the frame data;
wherein a process of performing the frame header alignment comprises: performing frame header alignment once each time 256 frames of data are input;
wherein a process of performing frame header alignment once comprises:
performing frame header positioning for the plurality of paths of input frame data; from positioned frame header position of each path of frame data, respectively writing data of each frame into a cache, after detecting an arrival of a high level of the indication signal, simultaneously reading each path of frame data from an initial position of the cache,
if there are deviations between the plurality of paths of input frame data and the indication signal in terms of frame header, delaying the indication signal according to the deviations; according to the delayed indication signal, performing frame header alignment for the plurality of paths of input frame data;
wherein a process of performing the multi-frame zeroing comprises: performing multi-frame zeroing once each time 256 frames of data are input;
wherein a process of performing multi-frame zeroing once comprises: when a high level of the indication signal arrives, zeroing a multi-frame of one or more paths of frame data input at this moment, obtaining a multi-frame of frame data successively by accumulating 1 to a multi-frame of an immediately previous frame data and outputting the frame data; until the high level of the indication signal arrives again, zeroing the multi-frame of one or more paths of frame data input at this moment.

2. The method for implementing frame header alignment and multi-frame zeroing according to claim 1, **characterized in that** when the indication signal is delayed, a delay period of the indication signal is determined by a deviation value between a frame header of the indication signal and a frame header of frame data to be performed with the frame header alignment.

3. An apparatus for implementing frame header alignment and multi-frame zeroing, the apparatus comprising: an indication signal generation unit, a frame header alignment unit and a multi-frame zeroing unit, wherein the indication signal generation unit is configured to generate an indication signal a period of which is 256 times of that of a single frame;
the frame header alignment unit is configured to, according to the indication signal generated by the indication signal generation unit, perform frame header alignment for a plurality of paths of input frame data and then output the frame data; and
the multi-frame zeroing unit is configured to, according to the indication signal generated by the indication signal generation unit, perform multi-frame zeroing for the plurality of paths of input frame data and then output the frame data;
wherein the frame header alignment unit is configured to perform frame header alignment once each time 256 frames of data are input, and the frame header alignment unit is configured to perform frame header alignment once by following the steps:
performing frame header positioning for the plurality of paths of input frame data; from positioned frame header position of each path of frame data, respectively writting data of each frame into a cache, after detecting an arrival of a high level of the indication signal, simultaneously reading each path of frame data from an initial position of the cache, if there are deviations between the plurality of paths of input frame data and the indication signal in terms of frame header, delaying the indication signal according to the deviations; according to the delayed indication signal, performing frame header alignment for the plurality of paths of input frame data;
wherein the multi-frame zeroing unit is further configured to perform multi-frame zeroing once each time 256 frames of data are input, and the multi-frame zeroing unit is further configured to perform the multi-frame zeroing once by following the steps:
when a high level of the indication signal arrives, zeroing a multi-frame of one or more paths of frame data input at this moment, obtaining a multi-frame of frame data input successively by accumulating 1 to a multi-frame of an immediately previous frame data and outputting the frame data; until the high level of the indication signal arrives again, zeroing the multi-frame of one or more paths of frame data input at this moment.

## Patentansprüche

1. Verfahren zur Implementierung einer Frame-Header-Ausrichtung und Multi-Frame-Nullstellung, **gekennzeichnet durch** umfassend:
Generieren eines Anzeigesignals, dessen Periode ein 256-Faches jener eines einzelnen Frames ist; und
gemäß dem Anzeigesignal, Durchführen einer Frame-Header-Ausrichtung für eine Vielzahl von Wegen eingegebener Frame-Daten und dann Ausgeben der Frame-Daten und Durchführen einer Multi-Frame-Nullstellung für die Vielzahl von Wegen eingegebener Frame-Daten und dann Ausgeben der Frame-Daten;
wobei ein Prozess zum Durchführen der Frame-Header-Ausrichtung umfasst:
einmaliges Durchführen einer Frame-Header-Ausrichtung jedes Mal, wenn 256 Daten-Frames eingegeben werden;
wobei ein Prozess zum einmaligen Durchführen einer Frame-Header-Ausrichtung umfasst:
Durchführen einer Frame-Header-Positionierung für die Vielzahl von Wegen eingegebener Frame-Daten; aus einer positionierten Frame-Header-Position jedes Frame-Datenwegs, jeweils Schreiben von Daten jedes Frames in einen Zwischenspeicher, nach Detektieren eines Eintreffens eines hohen Pegels des Anzeigesignals, gleichzeitig Lesen jedes Frame-Datenwegs aus einer anfänglichen Position des Zwischenspeichers, falls Abweichungen zwischen der Vielzahl von Wegen eingegebener Frame-Daten und dem Anzeigesignal im Sinne eines Frame-Headers vorliegen, Verzögern des Anzeigesignals gemäß den Abweichungen; gemäß dem verzögerten Anzeigesignal, Durchführen einer Frame-Header-Ausrichtung für die Vielzahl von Wegen eingegebener Frame-Daten;
wobei ein Prozess zum Durchführen der Multi-Frame-Nullstellung umfasst:
einmaliges Durchführen einer Multi-Frame-Nullstellung jedes Mal, wenn 256 Daten-Frames eingegeben werden;
wobei ein Prozess zum einmaligen Durchführen einer Multi-Frame-Nullstellung umfasst: wenn ein hoher Pegel des Anzeigesignals eintrifft, Nullstellen eines Multi-Frames eines oder mehrerer Wege von Frame-Daten, die in diesem Augenblick eingegeben werden, Erhalten eines Multi-Frames von Frame-Daten der Reihe nach durch Akkumulieren von 1 zu einem Multi-Frame unmittelbar vorangehender Frame-Daten und Ausgeben der Frame-Daten; bis der hohe Pegel des Anzeigesignals erneut eintrifft, Nullstellen des Multi-Frames eines oder mehrerer Wege von Frame-Daten, die in diesem Augenblick eingegeben werden.

2. Verfahren zur Implementierung einer Frame-Header-Ausrichtung und Multi-Frame-Nullstellung nach Anspruch 1, **dadurch gekennzeichnet, dass**, wenn das Anzeigesignal verzögert ist, eine Verzögerungsperiode des Anzeigesignals durch einen Abweichungswert zwischen einem Frame-Header des Anzeigesignals und einem Frame-Header von Frame-Daten bestimmt wird, die mit der Frame-Header-Ausrichtung durchzuführen sind.

3. Einrichtung zur Implementierung einer Frame-Header-Ausrichtung und Multi-Frame-Nullstellung, **gekennzeichnet durch** umfassend: eine Anzeigesignalgenerierungseinheit, eine Frame-Header-Ausrichtungseinheit und eine Multi-Frame-Nullstellungseinheit, wobei
die Anzeigesignalgenerierungseinheit konfiguriert ist, um ein Anzeigesignal zu generieren, das 256 einzelne Frames enthält, und eine Anzeigesignalperiode ein 256-Faches jener des einzelnen Frames ist;
die Frame-Header-Ausrichtungseinheit konfiguriert ist, um gemäß dem Anzeigesignal, das durch die Anzeigesignalgenerierungseinheit generiert wurde, eine Frame-Header-Ausrichtung für eine Vielzahl von Wegen eingegebener Frame-Daten durchzuführen und dann die Frame-Daten auszugeben; und
die Multi-Frame-Nullstellungseinheit konfiguriert ist, um gemäß dem Anzeigesignal, das durch die Anzeigesignalgenerierungseinheit generiert wurde, eine Multi-Frame-Nullstellung für die Vielzahl von Wegen eingegebener Frame-Daten durchzuführen und dann die Frame-Daten auszugeben;
wobei die Frame-Header-Ausrichtungseinheit konfiguriert ist, um jedes Mal, wenn 256 Daten-Frames eingegeben werden, einmal eine Frame-Header-Ausrichtung durchzuführen, und die Frame-Header-Ausrichtungseinheit konfiguriert ist, um eine Frame-Header-Ausrichtung einmal durch die folgenden Schritte durchzuführen:
Durchführen einer Frame-Header-Positionierung für die Vielzahl von Wegen eingegebener Frame-Daten; aus einer positionierten Frame-Header-Position jedes Frame-Datenwegs jeweils Schreiben von Daten jedes Frames in einen Zwischenspeicher, nach Detektieren eines Eintreffens eines hohen Pegels des Anzeigesignals, gleichzeitig Lesen jedes Frame-Datenwegs aus einer anfänglichen Position des Zwischenspeichers,
gemäß Abweichungen zwischen der Vielzahl von Wegen eingegebener Frame-Daten und dem Anzeigesignal im Sinne eines Frame-Headers, Verzögern des Anzeigesignals; gemäß dem verzögerten Anzeigesignal, Durchführen einer Frame-Header-Ausrichtung für die Vielzahl von Wegen eingegebener Frame-Daten;
wobei die Multi-Frame-Nullstellungseinheit weiter konfiguriert ist, um jedes Mal, wenn 256 Daten-Frames eingegeben werden, eine Multi-Frame-Nullstellung einmal durchzuführen, und die Multi-Frame-Nullstellungseinheit weiter konfiguriert ist, um die Multi-Frame-Nullstellung einmal durch die folgenden Schritte durchzuführen:
wenn ein hoher Pegel des Anzeigesignals eintrifft, Nullstellen eines Multi-Frames eines oder mehrerer Wege von Frame-Daten, die in diesem Augenblick eingegeben werden, Erhalten eines Multi-Frames von Frame-Daten, die der Reihe nach eingegeben werden, durch Akkumulieren von 1 zu einem Multi-Frame unmittelbar vorangehender Frame-Daten und Ausgeben der Frame-Daten; bis der hohe Pegel des Anzeigesignals erneut eintrifft, Nullstellen des Multi-Frames eines oder mehrerer Wege von Frame-Daten, die in diesem Augenblick eingegeben werden.

## Revendications

1. Procédé pour mettre en oeuvre un alignement d'en-tête de trame et une remise à zéro de multitrame, **caractérisé en ce qu'**il comprend :
la production d'un signal d'indication dont une période est 256 fois celle d'une trame simple ; et
selon le signal d'indication, l'exécution d'un alignement d'en-tête de trame pour une pluralité de chemins de données de trame d'entrée et ensuite la sortie des données de trame, et l'exécution d'une remise à zéro de multitrame pour la pluralité de chemins de données de trame d'entrée et ensuite la sortie des données de trame ;
dans lequel un processus d'exécution de l'alignement d'en-tête de trame comprend : l'exécution d'un alignement d'en-tête de trame une fois chaque fois que 256 trames de données sont entrées ;
dans lequel un processus d'exécution d'un alignement d'en-tête de trame une fois comprend :
l'exécution d'un positionnement d'en-tête de trame pour la pluralité de chemins de données de trame d'entrée ; à partir de la position d'en-tête de trame positionné de chaque chemin de données de trame, respectivement l'écriture de données de chaque trame dans un cache, après la détection d'une arrivée d'un haut niveau du signal d'indication, simultanément la lecture de chaque chemin de données de trame à partir d'une position initiale du cache, s'il y a des écarts entre la pluralité de chemins de données de trame d'entrée et le signal d'indication en termes d'en-tête de trame, le retard du signal d'indication selon les écarts ; selon le signal d'indication retardé, l'exécution d'un alignement d'en-tête de trame pour la pluralité de chemins de données de trame d'entrée ;
dans lequel un processus d'exécution de la remise à zéro de multitrame comprend : l'exécution d'une remise à zéro de multitrame une fois chaque fois que 256 trames de données sont entrées ;
dans lequel un processus d'exécution de remise à zéro de multitrame une fois comprend : quand un haut niveau du signal d'indication arrive, la remise à zéro d'une multitrame d'un ou plusieurs chemins de données de trame entrées à ce moment, l'obtention d'une multitrame de données de trame successivement en accumulant 1 à une multitrame de données de trame immédiatement précédente et la sortie des données de trame ; jusqu'à ce que le haut niveau du signal d'indication arrive de nouveau, la remise à zéro de la multitrame d'un ou plusieurs chemins de données de trame entrées à ce moment.

2. Procédé pour mettre en oeuvre un alignement d'en-tête de trame et une remise à zéro de multitrame selon la revendication 1, **caractérisé en ce que** lorsque le signal d'indication est retardé, une période de retard du signal d'indication est déterminée par une valeur d'écart entre un en-tête de trame du signal d'indication et un en-tête de trame de données de trame à effectuer avec l'alignement d'en-tête de trame.

3. Appareil pour mettre en oeuvre un alignement d'en-tête de trame et une remise à zéro de multitrame, **caractérisé en ce qu'**il comprend : une unité de production de signal d'indication, une unité d'alignement d'en-tête de trame et une unité de remise à zéro de multitrame, dans lequel
l'unité de production de signal d'indication est configurée pour produire un signal d'indication qui contient 256 trames simples, et une période du signal d'indication est 256 fois celle de la trame simple ;
l'unité d'alignement d'en-tête de trame est configurée pour, selon le signal d'indication produit par l'unité de production de signal d'indication, effectuer un alignement d'en-tête de trame pour une pluralité de chemins de données de trame d'entrée et sortir ensuite les données de trame ; et
l'unité de remise à zéro de multitrame est configurée pour, selon le signal d'indication produit par l'unité de production de signal d'indication, effectuer la remise à zéro de multitrame pour la pluralité des chemins de données de trame d'entrée et sortir ensuite les données de trame ;
dans lequel l'unité d'alignement d'en-tête de trame est configurée pour effectuer un alignement d'en-tête de trame une fois chaque fois que 256 trames de données sont entrées, et l'unité d'alignement d'en-tête de trame est configurée pour effectuer un alignement d'en-tête de trame une fois en suivant les étapes :
d'exécution d'un positionnement d'en-tête de trame pour la pluralité de chemins de données de trame d'entrée ; à partir d'une position d'en-tête de trame positionné de chaque chemin de données de trame, respectivement l'écriture de données de chaque trame dans un cache, après la détection d'une arrivée d'un haut niveau du signal d'indication, simultanément la lecture de chaque chemin de données de trame à partir d'une position initiale du cache,
selon des écarts entre la pluralité de chemins de données de trame d'entrée et le signal d'indication en termes d'en-tête de trame, le retard du signal d'indication ; selon le signal d'indication retardé, l'exécution d'un alignement d'en-tête de trame pour la pluralité de chemins de données de trame d'entrée ;
dans lequel l'unité de remise à zéro de multitrame est en outre configurée pour effectuer une remise à zéro de multitrame une fois chaque fois que 256 trames de données sont entrées, et l'unité de remise à zéro de multitrame est en outre configurée pour effectuer la remise à zéro de multitrame une fois en suivant les étapes :
quand un haut niveau du signal d'indication arrive, de remise à zéro d'une multitrame d'un ou plusieurs chemins de données de trame entrées à ce moment, d'obtention d'une multitrame d'entrée de données de trame successivement en accumulant 1 à une multitrame de données de trame immédiatement précédentes et de sortie des données de trame ; jusqu'à ce que le haut niveau du signal d'indication arrive de nouveau, de remise à zéro de la multitrame d'un ou plusieurs chemins de données de trame entrées à ce moment.
